# EUROPEAN PATENT SPECIFICATION

(11) **EP 1 942 637 B1**
(45) Date of publication and mention of the grant of the patent: **27.01.2016**
(21) Application number: 06822350.2
(22) Date of filing: 26.10.2006
(51) Int. Cl.: H04M 1/00

(54) **PHONE TERMINAL AND SIGNAL PROCESSING METHOD**
TELEFONENDGERÄT UND SIGNALVERARBEITUNGSVERFAHREN
TELEPHONE ET PROCEDE DE TRAITEMENT DE SIGNAL

(30) Priority: 26.10.2005 JP 2005311278
(43) Date of publication of application: 09.07.2008
(73) Proprietor: NEC Corporation, Minato-ku, Tokyo 108-8001 (JP)
(72) Inventor: KURODA, Jun, Tokyo 1080014 (JP); MURATA, Yukio, Tokyo 1080014 (JP); MORI, Ukyou, Tokyo 1080014 (JP)
(74) Representative: Vossius & Partner Patentanwälte Rechtsanwälte mbB
(86) International application number: PCT/JP2006/321374
(87) International publication number: WO 2007/049696

(56) References cited:
- EP-A- 1 349 149
- EP-A- 1 630 792
- WO-A-98/58448
- JP-A- 9 204 290
- JP-A- 09 149 157
- JP-A- 2000 092 161
- JP-A- 2003 295 899
- US-A- 5 930 372

## Description

The present invention relates to signal processing of a telephone terminal and, more particularly, to processing of a sound signal input to a telephone terminal being used for a telephone call.

Hitherto, a telephone terminal such as a cellular phone or a fixed-line telephone has various operation means such as a key button and a change-over switch. Depending on mechanical structures of the operation means or the structure of a terminal casing, large vibration and sound occur during an operation. In the case where such vibration and sound occur during a telephone call, there is a case that they propagate in the casing and space and are captured by a microphone of the terminal. Signals of the captured vibration and sound are transmitted to a telephone line and, as a result, an inconvenience occurs such that the other party of the telephone call hears unpleasant sound.

For example, as a technique for solving the inconvenience, there is a technique described in JP-2003-295899 A corresponding to EP 1349 149 A2 (patent document 1) which will be described. In said patent document 1, a sound input device that eliminates components of an operation sound as noise from sound entered during a key operation detection period is provided. The device detects a signal interval in which components of an operation sound are added to a digital signal of input sound and performs a process of interpolating the interval with a sound signal to which the components of the operation sound are not added.

By the method described in the patent document 1, by removing noise caused by a key operation, the sound quality can be improved. However, to realize the function, complicated digital processing is necessary for an input sound signal. Therefore, in the case of providing a telephone terminal with the function, increase in the product cost of the terminal is concerned.

Although transmission of noise caused by an operation during a telephone call has to be prevented, inherently, an operation during a telephone call is an operation of relatively low frequency such as a change in a reception call volume or a response to a call from a third party. It is therefore undesirable from the viewpoint of sales that the manufacture cost increases due to such an operation.

The present invention has been achieved in view of the problem and an object of the invention is to provide a method capable of easily preventing noise caused by an operation on a telephone terminal being used for a telephone call from being transmitted to the other party.

This object is achieved with the features of the independent claims. Embodiments of the invention are defined by the dependent claims.

A telephone terminal may includes: an operation unit inputting an operation signal corresponding to an operation of a user; a sound input unit inputting a sound signal corresponding to sound captured from an outside; a signal processing unit converting the sound signal from the sound input unit to a transmission signal and transmitting the transmission signal to a telephone line; and a control unit interrupting propagation of the sound signal inputted to the signal processing unit at the time when the operation signal from the operation unit is recognized.

A signal processing method for a telephone terminal being in a communication state where the telephone terminal converts a sound signal corresponding to sound captured from an outside to a transmission signal and transmits said transmission signal to a telephone line, comprising a step of interrupting propagation of the sound signal in the telephone terminal.

### Effect of the Invention

According to the invention, sound caused by an operation on a telephone terminal during a telephone call can be easily prevented from being transmitted. Therefore, the other party can be prevented from hearing unpleasant sound.
The invention is further described with reference to the drawings:

FIG. 1 is a Block diagram showing a basic configuration of an embodiment of a telephone terminal according to the present invention;
FIG. 2 is a drawing of the appearance of a cellular phone terminal of an embodiment;
FIG. 3 is a flowchart showing operation procedure of a first embodiment;
FIG. 4 is a flowchart showing operation procedure of a second embodiment;
FIG. 5 is a block diagram showing the configuration of a specific example (No. 1) of the embodiment;
FIG. 6 is a block diagram showing the configuration of a specific example (No. 2) of the embodiment; and
FIG. 7 is a block diagram showing the configuration of a specific example (No. 3) of the embodiment.

Embodiments of the present invention will be described in detail with reference to the drawings. The embodiments described below relate to modes of applying the present invention to a cellular phone terminal.

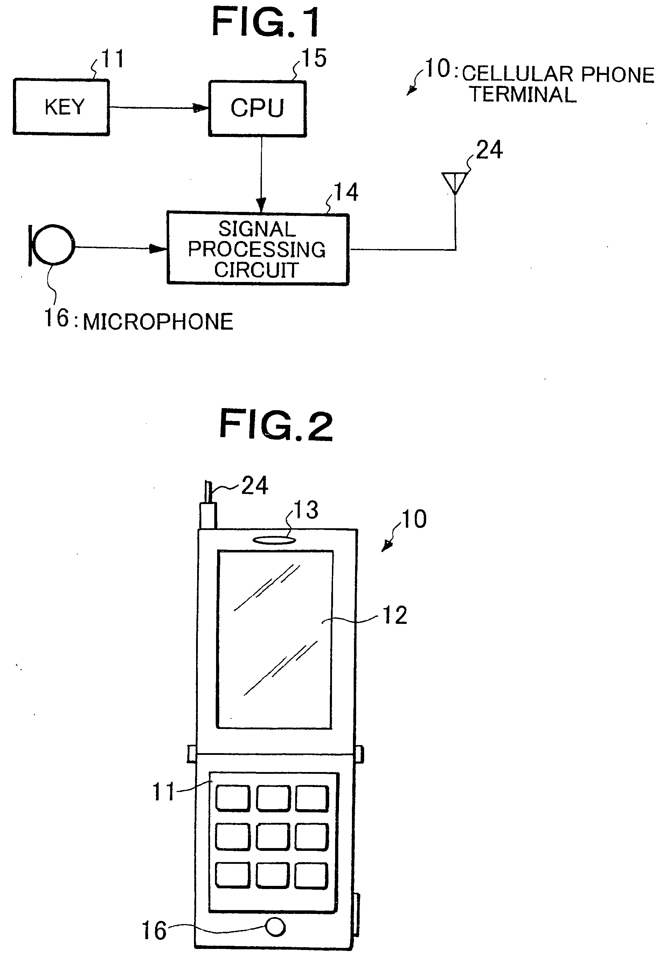

FIG. 1 shows the basic configuration of a cellular phone terminal 10 of a first embodiment. As shown in FIG. 1, the cellular phone terminal 10 has key buttons 11 corresponding to an operation unit of the telephone terminal of the invention, a microphone 16 corresponding to a sound input unit, a CPU (Central Processing Unit) 15 corresponding to a control unit, and a signal processing circuit 14 corresponding to a signal processing unit and performing radio communication via an antenna 24.

FIG. 2 shows the appearance of the cellular phone terminal 10. The appearance of the cellular phone terminal 10 is similar to that of a general cellular phone terminal. Specifically, as shown in FIG. 2, the cellular phone terminal 10 has the antenna 24 provided at the end of the casing, a speaker 13 as receiving means, a display 12 as display means, the key buttons 11, and the microphone 16.

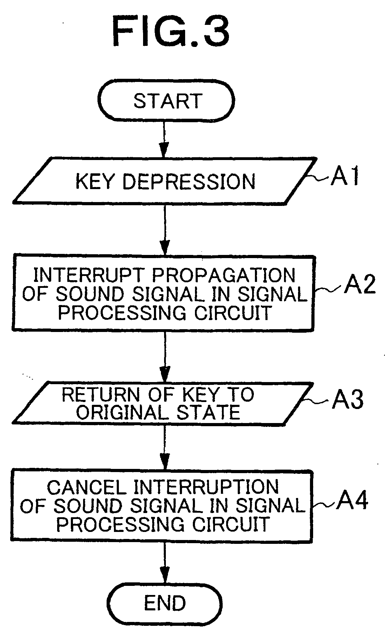

With reference to the flowchart of FIG. 3, the operation of the cellular phone terminal 10 will be described. The operation procedure shown in the flowchart to be referred to below corresponds to operations performed when a program stored in not-shown storing means of the cellular phone terminal 10 is executed by the CPU 15.

First, when the user depresses a key button 11 to perform adjustment of telephone receiving sound volume or the like while the cellular phone terminal 10 is in a communication state, a key depression operation signal is input by a control device of the key button 11. As a result, the CPU 15 recognizes that a key depression interrupting process is generated (step A1). In the case where sound caused by depression of the key button 11 is captured by the microphone 16, a sound signal of the sound is supplied from the microphone 16 to the signal processing circuit 14.

When depression of the key button 11 is recognized, the CPU 15 supplies a signal for interrupting propagation of the sound signal input from the microphone 16 to the signal processing circuit 14 (step A2). The signal processing circuit 14 that receives the signal stops the operation or operates so as to invalidate the sound signal from the microphone 16.

Subsequently, when the user releases the key button 11, the CPU 15 recognizes generation of an interruption process indicative of return of the key to the original state (step A3). When return of the key to the original state is recognized, the CPU 15 supplies a signal for cancelling interruption of a sound signal to the signal processing circuit 14 (step A4). In response to the signal, propagation of the sound signal from the microphone 16 restarts in the signal processing circuit 14.

In the first embodiment, on recognition of operation of the key button 11, the CPU 15 controls so as to interrupt propagation of the sound signal in the signal processing circuit 14. Therefore, transmission of a sound caused by a key operation can be easily prevented. In addition, a propagation restart timing is associated with the return operation inevitably accompanying the depressing operation, so that the control of the CPU 15 can be simplified.

A second embodiment of the present invention will now be described. In the embodiment, so-called long-depression operation of continuously depressing the key button 11 for a predetermined period is considered. The difference between the second embodiment and the first embodiment is the control procedure of the CPU 15. The hardware configuration of the cellular phone terminal 10 of the second embodiment is similar to that shown in FIGS. 1 and 2, so that the description will not be repeated.

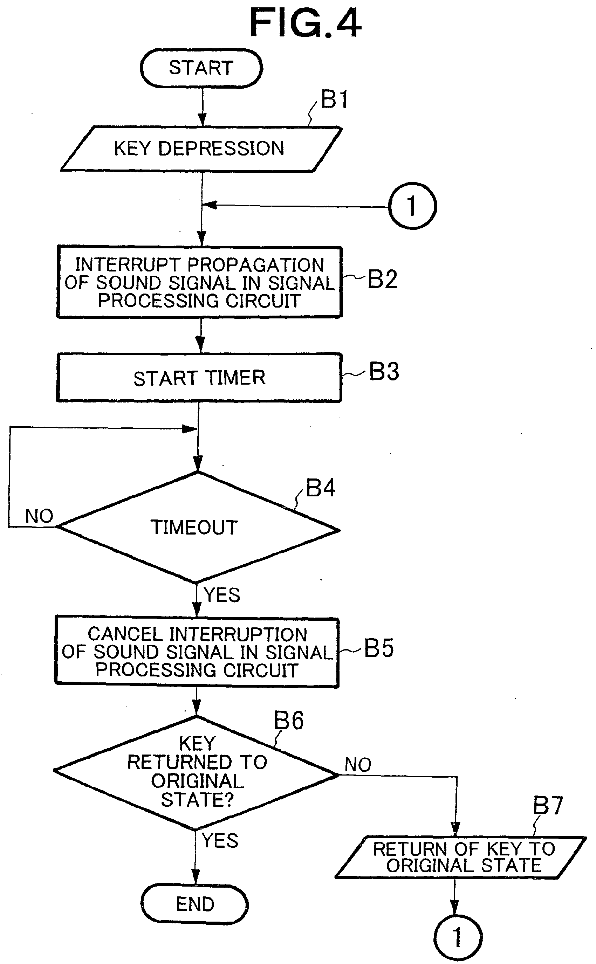

With reference to the flowchart of FIG. 4, the operation of the second embodiment will be described. When depression of the key button 11 is recognized in a communication state (step B1), the cellular phone terminal 10 gives the interruption signal to the signal processing circuit 14 (step B2). At this time, the CPU 15 starts a timer process for counting a preset period (step B3).

When completion of the timer process is recognized (Yes in step B4), the CPU 15 gives the signal of cancelling interruption of the sound signal to the signal processing circuit 14 (step B5). In response to the signal, the propagation of the sound signal in the signal processing circuit 14 restarts.

Subsequently, the CPU 15 determines the state of the depressed key button 11 (step B6). When it is recognized that the key has returned to the original state (step B7), the interruption signal is supplied again to the signal processing circuit 14 (step B2). After that, the timer process (steps B3 and B4) is performed, propagation of the sound signal is restarted (step B5), and the process is finished.

As described above, in the cellular phone terminal 10 of the embodiment, propagation of the sound signal is temporarily interrupted at both of the time point when the key button 11 is depressed, and the time point when the key has returned to the original state. The CPU 15 automatically recognizes the recovery timing after interruption by the timer process. Therefore, in the second embodiment, the sound signal interruption period can be properly controlled in uses requiring the key long-depress operation.

Next, three specific examples of the foregoing embodiments will be described with respect to the components of the signal processing circuit 14 and the control of the CPU 15 on the signal processing circuit 14. To carry out the specific examples, the layout of the signal processing circuit 14 is set in consideration of balance between propagation speed of a sound signal input from the microphone 16 and the processing speed of the CPU 15.

### Concrete Example 1

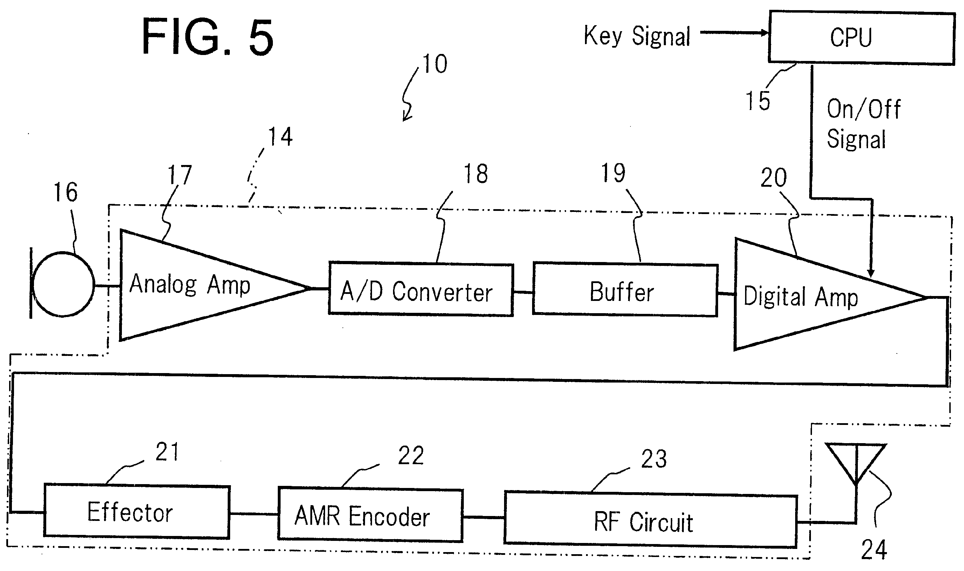

FIG. 5 shows the configuration of the cellular phone terminal 10 of a specific example (No. 1). First, components of the signal processing circuit 14 shown in the diagram will be described. An analog amplifier 17 receives an analog sound signal output from the microphone 16 and amplifies it. An A/D converter 18 converts the sound signal from the analog amplifier 17 to a digital signal. A digital amplifier 20 amplifies the digital sound signal from the A/D converter 18.

An effecter 21 performs various acoustic processes such as noise removal on the sound signal from the digital amplifier 20. An AMR encoder 22 encodes the sound signal from the effecter 21 in an AMR format. An RF circuit 23 is a communication circuit including an RF power amplifier, a frequency filter, and a switch, generates a radio transmission signal on the basis of the output of the AMR encoder 22 and transmits the signal by the antenna 24.

While the cellular phone terminal 10 having the signal processing circuit 14 is in a telephone conversation state, at the time of interrupting propagation of the sound signal from the microphone 16 (step A2 in FIG. 3 and step B2 in FIG. 4), the CPU 15 supplies a signal of stopping the operation to the analog amplifier 17. The signal is a signal for stopping the amplifying operation of the analog amplifier 17 and controlling to achieve isolation of an input/output potential in the analog amplifier 17.

At the time of cancelling interruption of the sound signal (step A4 in FIG. 3 and step B5 in FIG. 4), the CPU 15 supplies a signal for restarting the operation to the analog amplifier 17. In response to the signal, the sound signal input from the microphone 16 propagates in the signal processing circuit 14.

To stop/restart the operation of the analog amplifier 17, the power source voltage to a transistor at the output stage in the analog amplifier 17 or base or gate bias voltage is interrupted/applied. Therefore, although not shown in FIG. 5, in reality, an active element such as a transistor is inserted in a target line.

With the configuration shown in FIG. 5, even when a sound signal caused by a key operation is input from the microphone 16, the signal can be promptly interrupted before various signal processes are performed. The configuration is suitable for, for example, the cellular phone terminal 10 using the CPU 15 whose processing speed is relatively high.

### Concrete Example 2

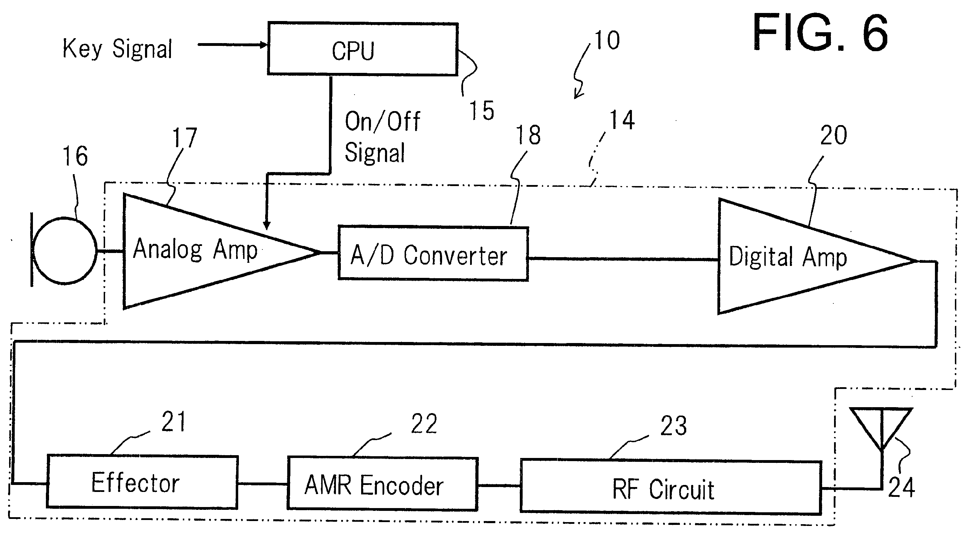

FIG. 6 shows the configuration of the cellular phone terminal 10 of a specific example (No. 2). The signal processing circuit 14 of the specific example has a configuration in which a buffer 19 for delaying propagation of the sound signal output from the A/D converter 18 is inserted in front of the digital amplifier 20. A signal for interrupting propagation of the sound signal is supplied to the digital amplifier 20. The signal is according to the signal supplied to the analog amplifier 17 in the foregoing example (No. 1).

In the configuration, when sound caused by a key operation during telephone conversation is captured by the microphone 16, the sound signal passes through the analog amplifier 17 and the A/D converter 18 and temporarily stored in the buffer 19. The sound signal accumulated in the buffer 19 before the sound signal caused by the key operation is sequentially transmitted via the digital amplifier 20 and, meanwhile, the CPU 15 performs a process of recognizing the key operation.

When the key operation is recognized, the CPU 15 gives an operation stop instruction to the digital amplifier 20 at the post stage of the buffer 19. By the instruction, even if a sound signal caused by a key operation is input from the buffer 19 to the digital amplifier 20, the input is invalidated. After that, a signal for restarting the operation is given from the CPU 15 to the digital amplifier 20, so that a sound signal propagates through the signal processing circuit 14.

As described above, in the specific example, the buffer 19 for intentionally delaying propagation of the sound signal prior to interruption of the sound signal is inserted. Therefore, the configuration shown in FIG. 6 is suitable for the case such that sufficient time cannot be assured as time of propagation from the microphone 16 to the digital amplifier 20 due to designing, or the processing speed of the CPU 15 is relatively low.

In the specific example, the sound signal interruption position is posterior to that in the configuration of FIG. 5. Consequently, the propagation of the sound signal while the CPU 15 recognizes the key operation can be delayed more. Therefore, if sufficient propagation time can be assured until the sound signal reaches the digital amplifier 20, the buffer 19 may be eliminated from the configuration shown in FIG. 6.

### Concrete Example 3

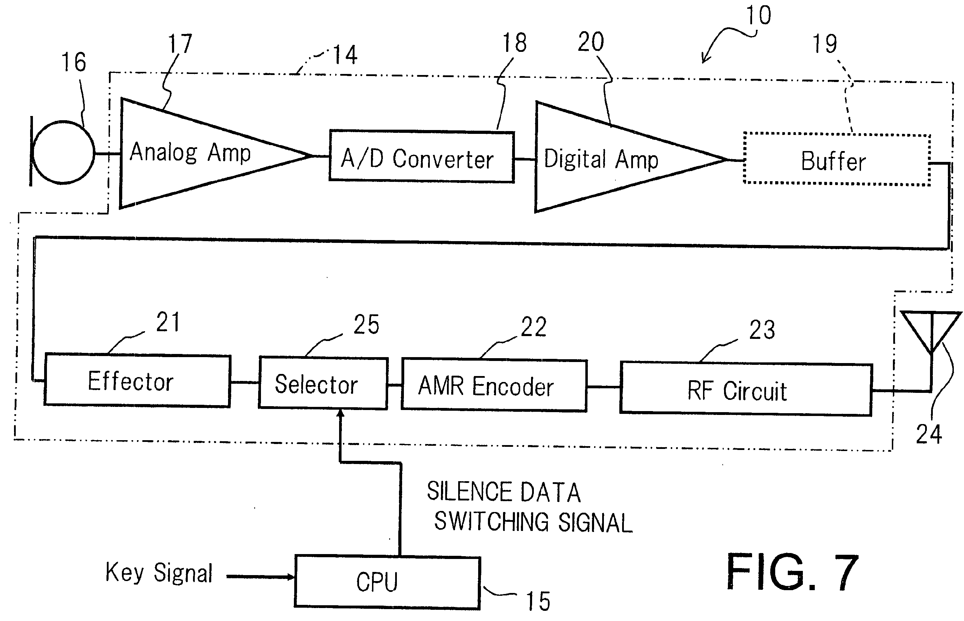

FIG. 7 shows the configuration of a cellular phone terminal 10 of a specific example (No. 3). The signal processing circuit 14 has a configuration that a selector 25 for receiving an instruction on interruption/recovery of a sound signal is inserted between the effector 21 and the AMR encoder 22 as shown in FIG. 7. The selector 25 outputs a sound signal or a sound signal of silence data from the effector 21 to the AMR encoder 22 on the basis of the instruction of the CPU 15.

In the case where the processing time of the CPU 15 on the selector 25 is longer than time required for the sound signal to reach the selector 25, that is, in the case where the sufficient propagation delay with respect to the process of the CPU 15 cannot be assured, the buffer 19 may be inserted in the signal processing circuit 14. The insertion position may be, for example, the front of the effector 21 as shown by a dotted line in FIG. 7.

On the other hand, when the buffer 19 is not inserted in the path of the sound signal, the signal processing circuit 14 can be simplified. In the layout of the signal processing circuit 14, propagation time of the sound signal from the microphone 16 to the selector 25 without the buffer 19 and time of processing of the CPU 15 on the selector 25 have to coincide with each other. Therefore, in the case where the buffer 19 is not used, the sound signal interruption position in the signal processing circuit 14 is desirably more to the back.

In the specific example, to insert the selector 25 in a position more to the back, the selector 25 is inserted between the effector 21 and the AMR encoder 22 as shown in FIG. 7. The position is a position in which the sound signal caused by the key operation is interrupted before it is encoded and also a position in which switching of a signal is performed relatively easily among backward positions.

In the configuration, at the time of interruption propagation of the sound signal from the microphone 16 (step S2 in FIG. 3 and step B2 in FIG. 4), the CPU 15 sends, to the selector 25, an instruction to output a sound signal of silence data in place of the sound signal from the effector 21. When the instruction is recognized by the selector 25, the sound signal of silence data is input to the AMR encoder 22 and encoded by the AMR encoder 22. As a result, a transmission signal of silence (which may include noise to some extent) is transmitted from the RF circuit 23.

At the time of cancelling interruption of the sound signal (step A4 in FIG. 3 and step B5 in FIG. 4), the CPU 15 instructs the selector 25 to output the sound signal from the effector 21 to the AMR encoder 22 in place of the sound signal of silence data.

In the specific example shown in FIG. 7, even if the sound signal caused by the key operation is input to the signal processing circuit 14, the sound signal can be interrupted without stopping the operation of the circuit. With the configuration in which the buffer 19 is not inserted, the signal processing circuit 14 can be simplified. It is advantageous particularly for the cellular phone terminal 10 required to have a smaller circuit.

In the foregoing embodiments, the present invention is applied to the cellular phone terminal (10). However, the invention is not limited to a wireless cellular phone terminal but can be also applied to a wired fixed-line phone terminal. Although the operation of the key button (11) is a target process in the foregoing embodiments, the target operation is not limited to the operation. Another operation accompanying generation of sound or vibration such as a switch change-over operation may be set as a target operation.

## Claims

1. A telephone terminal (10) comprising:
an operation unit (11) for inputting an operation signal corresponding to an operation of a user;
a sound input unit (16) for inputting a sound signal corresponding to sound captured from an outside of the telephone terminal; and
a signal processing unit (14) for converting the sound signal from the sound input unit to a transmission signal and transmitting the transmission signal to a telephone line;
**characterized by**:
a control unit (15) for interrupting transmission of the sound signal inputted to the signal processing unit at the time when the operation signal from the operation unit is recognized,
wherein the control unit (15) is addapted to recognize each of a signal indicating depression of a key and a signal indicating return of said key to the original state as the operation signal and to cancel the interruption of the sound signal after a lapse of a predetermined period since said interruption.

2. The telephone terminal according to claim 1, wherein
the signal processing unit (14) includes an amplifier (17) which is adapted to amplify the sound signal, and
the control unit (15) is adapted to give an instruction to stop an operation to the amplifier at the time of interrupting propagation of the sound signal.

3. The telephone terminal according to claim 2, wherein the amplifier (17) is an amplifier which is addapted to amplify an analog sound signal output from the sound input unit.

4. The telephone terminal according to claim 2, wherein
the signal processing unit (14) further includes a buffer (19) for delaying propagation of a sound signal to be input to the amplifier, and
the amplifier (20) is an amplifier for amplifying a digital sound signal from the buffer.

5. The telephone terminal according to claim 1, wherein:
the signal processing unit (14) includes an effector (21) which is addapted to perform an acoustic process on the sound signal, an encoder (22) which is addapted to encode the sound signal, a communication circuit which is addapted to generate a transmission signal on the basis of an output of the encoder and outputs the transmission signal to a telephone line, and a selector (25) which is addapted to input either a sound signal from the effector or a sound signal indicating silence to the encoder; and
the control unit (15) is addapted to give an instruction to output the sound signal indicating silence to the selector at the time of interrupting propagation of the sound signal.

6. The telephone terminal according to any one of claims 1 to 5, wherein the signal processing unit (14) includes an RF circuit (23) which is addapted to output a radio transmission signal to the telephone line.

7. A signal processing method, for a telephone terminal being in a communication state where the telephone terminal converts a sound signal corresponding to sound captured from an outside of the telephone terminal to a transmission signal and transmits said transmission signal to a telephone line,
**characterized by**:
said method comprising the following steps:
interrupting transmission of the sound signal in the telephone terminal,
recognizing each of a signal indicating depression of a key and a signal indicating return of said key to the original state as an operation signal; and
canceling the interruption of the sound signal after a lapse of a predetermined period since said interruption.

## Patentansprüche

1. Telefonendgerät (10) mit:
einer Bedienungseinheit (11) zum Eingeben eines Bedienungssignals, das einer Bedienung eines Benutzers entspricht;
einer Toneingabeeinheit (16) zum Eingeben eines Tonsignals, das einem Ton entspricht, der von außerhalb des Telefonendgeräts aufgenommen wird; und
einer Signalverarbeitungseinheit (14) zum Umwandeln des Tonsignals aus der Toneingabeeinheit in ein Übertragungssignal und zum Übertragen des Übertragungssignals zu einer Telefonleitung;
**gekennzeichnet durch**:
eine Steuereinheit (15) zum Unterbrechen der Übertragung des Tonsignals, das in die Signalverarbeitungseinheit eingegeben wird, zu der Zeit, zu der das Bedienungssignal aus der Bedienungseinheit erkannt wird,
wobei die Steuereinheit (15) eingerichtet ist, jeweils ein Signal, das das Drücken einer Taste anzeigt, und ein Signal, das die Rückkehr der Taste in ihren ursprünglichen Zustand anzeigt, als das Bedienungssignal zu erkennen, und die Unterbrechung des Tonsignals nach dem Ablauf einer vorgegebenen Zeitspanne seit der Unterbrechung aufzuheben.

2. Telefonendgerät nach Anspruch 1, wobei
die Signalverarbeitungseinheit (14) einen Verstärker (17) aufweist, der eingerichtet ist,
das Tonsignal zu verstärken, und
die Steuereinheit (15) eingerichtet ist, zur Zeit der Unterbrechung der Ausbreitung des Tonsignals einen Befehl an den Verstärker zu erteilen, einen Betrieb zu stoppen.

3. Telefonendgerät nach Anspruch 2, wobei der Verstärker (17) ein Verstärker ist, der eingerichtet ist, ein analoges Tonsignal zu verstärken, das aus der Toneingabeeinheit ausgegeben wird.

4. Telefonendgerät nach Anspruch 2, wobei
die Signalverarbeitungseinheit (14) ferner einen Puffer (19) zum Verzögern der Ausbreitung eines Tonsignals aufweist, das in den Verstärker eingegeben werden soll, und der Verstärker (20) ein Verstärker zum Verstärken eines digitalen Tonsignals aus dem Puffer ist.

5. Telefonendgerät nach Anspruch 1, wobei:
die Signalverarbeitungseinheit (14) aufweist: einen Effektor (21), der eingerichtet ist, einen akustischen Prozess am Tonsignal auszuführen, einen Codierer (22), der eingerichtet ist, das Tonsignal zu codieren, eine Kommunikationsschaltung, die eingerichtet ist, auf der Grundlage eines Ausgangssignals des Codierers ein Übertragungssignal zu erzeugen und das Übertragungssignal an eine Telefonleitung auszugeben, und einen Selektor (25), der eingerichtet ist, entweder ein Tonsignal aus dem Effektor oder ein Tonsignal, das Stille anzeigt, in den Codierer einzugeben; und
die Steuereinheit (15) eingerichtet ist, einen Befehl zu erteilen, das Tonsignal, das Stille anzeigt, zur Zeit der Unterbrechung der Ausbreitung des Tonsignals an den Selektor auszugeben.

6. Telefonendgerät nach einem der Ansprüche 1 bis 5, wobei die Signalverarbeitungseinheit (14) eine HF-Schaltung (23) aufweist, der eingerichtet ist, ein Funkübertragungssignal an die Telefonleitung auszugeben.

7. Signalverarbeitungsverfahren für ein Telefonendgerät, das sich in einem Kommunikationszustand befindet, wobei das Telefonendgerät ein Tonsignal, das einem Ton entspricht, der von außerhalb des Telefonendgeräts aufgenommen wird, in ein Übertragungssignal umwandelt und das Übertragungssignal an eine Telefonleitung ausgibt, **dadurch gekennzeichnet, dass** das Verfahren die folgenden Schritte aufweist:
Unterbrechen der Übertragung des Tonsignals im Telefonendgerät,
Erkennen jeweils eines Signals, das das Drücken einer Taste anzeigt, und eines Signals, das die Rückkehr der Taste in ihren ursprünglichen Zustand anzeigt, als ein Bedienungssignal; und
Aufheben der Unterbrechung des Tonsignals nach dem Ablauf einer vorgegebenen Zeitspanne seit der Unterbrechung.

## Revendications

1. Terminal téléphonique (10) comprenant :
une unité de fonctionnement (11) destinée à entrer un signal de fonctionnement correspondant à une utilisation par un utilisateur ;
une unité d'entrée audio (16) destinée à entrer un signal sonore correspondant au son enregistré à l'extérieur du terminal téléphonique ; et
une unité de traitement de signal (14) destinée à convertir le signal sonore de l'unité d'entrée audio en un signal de transmission, et à transmettre le signal de transmission à une ligne téléphonique ;
**caractérisé par** :
une unité de commande (15) destinée à interrompre la transmission du signal sonore entrée dans l'unité de traitement de signal au moment où le signal de fonctionnement de l'unité de fonctionnement est reconnu,
l'unité de commande (15) étant prévue pour reconnaître un signal indicateur d'un enfoncement d'une touche ainsi qu'un signal indicateur du retour de la touche à l'état initial en tant que signal de fonctionnement, et pour annuler l'interruption du signal sonore après un intervalle de temps défini suivant l'interruption.

2. Terminal téléphonique selon la revendication 1, où
l'unité de traitement de signal (14) comprend un amplificateur (17) prévu pour amplifier le signal sonore, et où
l'unité de commande (15) est prévue pour transmettre une instruction d'arrêt de fonctionnement à l'amplificateur au moment de l'interruption de la propagation du signal sonore.

3. Terminal téléphonique selon la revendication 2, où l'amplificateur (17) est un amplificateur prévu pour amplifier un signal sonore analogique émis par l'unité d'entrée audio.

4. Terminal téléphonique selon la revendication 2, où
l'unité de traitement de signal (14) comprend en outre un tampon (19) destiné à retarder la propagation d'un signal sonore à entrer dans l'amplificateur, et
l'amplificateur (20) est un amplificateur destiné à amplifier un signal sonore numérique du tampon.

5. Terminal téléphonique selon la revendication 1, où :
l'unité de traitement de signal (14) comprend un effecteur (21) prévu pour exécuter un traitement acoustique du signal sonore, un encodeur (22) prévu pour encoder le signal sonore, un circuit de communication prévu pour générer un signal de transmission sur la base d'une sortie de l'encodeur et transmettre le signal de transmission à une ligne téléphonique, et un sélecteur (25) prévu pour entrer soit un signal sonore de l'effecteur, soit un signal sonore indicateur de silence à l'encodeur ; et
l'unité de commande (15) est prévue pour émettre une instruction de transmission du signal sonore indicateur de silence au sélecteur au moment de l'interruption de la propagation du signal sonore.

6. Terminal téléphonique selon l'une des revendications 1 à 5, où l'unité de traitement de signal (14) comprend un circuit RF (23) prévu pour transmettre un signal de transmission radio à la ligne téléphonique.

7. Procédé de traitement de signal pour un terminal téléphonique en état de communication, où le terminal téléphonique convertit un signal sonore correspondant au son enregistré à l'extérieur du terminal téléphonique en un signal de transmission, et transmet le signal de transmission à une ligne téléphonique,
**caractérisé en ce que**
ledit procédé comprend les étapes suivantes :
interruption de la transmission du signal sonore dans le terminal téléphonique,
reconnaissance d'un signal indicateur d'un enfoncement d'une touche ainsi que d'un signal indicateur du retour de la touche à l'état initial en tant que signal de fonctionnement ; et
annulation de l'interruption du signal sonore après un intervalle de temps défini suivant l'interruption.
